# EUROPÄISCHE PATENTSCHRIFT

(11) **EP 0 345 569 B1**
(45) Veröffentlichungstag und Bekanntmachung des Hinweises auf die Patenterteilung: **20.01.1993**
(21) Anmeldenummer: 89109569.7
(22) Anmeldetag: 26.05.1989
(51) Int. Cl.: G01G 7/02, G01G 21/22, B01F 13/08

(54) **Oberschalige elektronische Waage**
Electronic top pan balance
Balance électronique à plateaux supérieurs

(30) Priorität: 04.06.1988 DE 3819073
(43) Veröffentlichungstag der Anmeldung: 13.12.1989
(73) Patentinhaber: SARTORIUS AG, 37075 Göttingen (DE)
(72) Erfinder: Maaz, Günther, Dr., D-3418 Uslar 1 (DE); Dardat, Klaus, D-3402 Dransfeld (DE); Klauer, Alfred, Dr., D-3400 Göttingen (DE)
(74) Vertreter: Köhler, Rudolf

(56) Entgegenhaltungen:
- EP-A- 0 052 324
- DE-A- 3 136 049
- US-A- 4 725 149

## Beschreibung

Die Erfindung bezieht sich auf eine oberschalige elektronische Waage, wie sie allgemein bekannt ist.

Ebenfalls allgemein bekannt ist die Benutzung von magnetischen Rührern, bei denen durch mehrere Spulen außerhalb des Gefäßes ein magnetisches Drehfeld erzeugt wird und ein Permanentmagnet innerhalb des Gefäßes von diesem Drehfeld mitgenommen wird. Aus der US-PS 4 725 149 ist es weiter bekannt, eine oberschalige Waage und mindestens einen Magnetrührer nebeneinander aufzustellen, den Behälter mit dem Wägegut durch einen Drehtisch zwischen Waage und Magnetrührer hin und her zu transportieren und dadurch Dosier- und Mischvorgänge zu automatisieren.

Aufgabe der Erfindung ist es nun, eine oberschalige elektronische Waage so weiterzubilden, daß die Waage die Funktion des Rührers mit übernehmen kann und daß ein gleichzeitiges Wägen und Rühren möglich ist.

Erfindungsgemäß wird dies dadurch erreicht, daß in der Waagschale die Antriebsmittel für einen Magnetrührer integriert sind.

Durch diese Integration ergibt sich häufig eine deutliche Zeiteinsparung, da die Zeit für die Wägung und das anschließende Umsetzen auf einen getrennten Magnetrührer entfällt und die Wägung statt dessen nebenbei während des Rührvorganges stattfindet. Dies ist vorteilhaft z.B. bei der Schaffung neuer Farbmischungen in der Farbenindustrie. Die zugegebenen Farbkomponenten werden sofort verrührt und durchmischt, können optisch kontrolliert, eventuell tonmäßig nachgebessert und die Komponenten sofort gravimetrisch erfaßt, registriert und somit die erarbeitete Rezeptur für die neue Farbmischung dokumentiert werden.

Daneben ist es z.B. auch möglich, bei Suspensionen das Absetzen der Partikel während des Wägevorganges zu verhindern, so daß die Suspension sofort nach der Wägung weiterverarbeitet werden kann. Dadurch ist z.B. eine portionierende Entnahme der Suspension aus einem Vorratsbehälter z.B. Bioreaktor unmittelbar von der Waage aus möglich. Auch in Verbindung mit filtrierenden Rührzellen, wie sie z.B. durch die DE-OS 34 45 446 bekannt sind, lassen sich kontinuierliche Filtrationen und Aufkonzentrationen gravimetrisch überwachen.

Vorteilhafte Ausgestaltungen ergeben sich aus den abhängigen Ansprüchen.

Die Erfindung wird im folgenden anhand der schematischen Figuren beschrieben. Dabei zeigt:
- Fig. 1: eine perspektivische Gesamtansicht der Waage,
- Fig. 2: einen Schnitt durch die wesentlichen mechanischen Teile der Waage und ein Blockschaltbild der Elektronik,
- Fig. 3: eine Aufsicht auf die Antriebsmittel für den Magnetrührer,
- Fig. 4: ein Detail der Waage in einer anderen Ausgestaltung und
- Fig. 5: einen Schnitt durch die Waage in einer dritten Ausgestaltung.

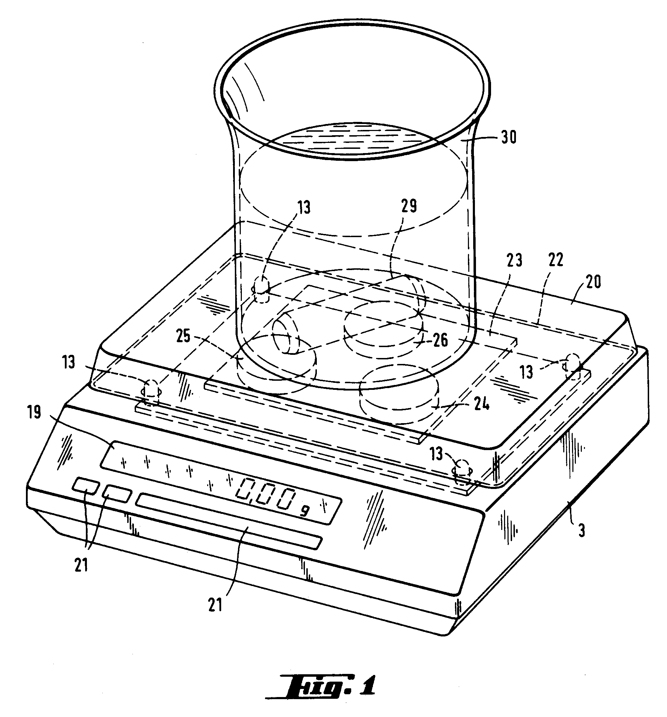

In der perspektivischen Gesamtansicht der Waage in Fig. 1 erkennt man das Gehäuse 3, die Waagschale 20, die Anzeige 19 und Bedienungstasten 21. Die Waagschale 20 ist etwas höher ausgebildet als bei üblichen Waagen, um Antriebsmittel für einen Magnetrührer aufzunehmen. Diese Antriebsmittel können z.B. aus einem flachen Elektromotor mit senkrechter Achse, die am oberen Ende einen Permanentmagneten trägt, bestehen; oder sie können auch aus mehreren Spulen bestehen, die so von einem Wechselstrom durchflossen werden, daß ein magnetisches Drehfeld oberhalb der Waagschale entsteht. Das eigentliche Rührelement besteht dann aus einem Permanentmagneten 29, der auf dem Boden des Gefäßes 30 oder der Filterzelle liegt und vom magnetischen Drehfeld mitgenommen wird, sobald das Gefäß auf die Waagschale gestellt wird. Einzelheiten des Aufbaues und der Formgebung von Magnetrührern sind von den diskreten Geräten her bekannt und können für die erfindungsgemäße integrierte Lösung übernommen werden, so daß sie hier nicht im einzelnen erläutert werden müssen. Diese durch die Waagschale verdeckten Antriebsmittel sind in Fig. 1 zur Verdeutlichung der Erfindung in Form von drei Spulen 24, 25 und 26, die auf einer weichmagnetischen Rückschlußplatte 23 befestigt sind, gestrichelt angedeutet.

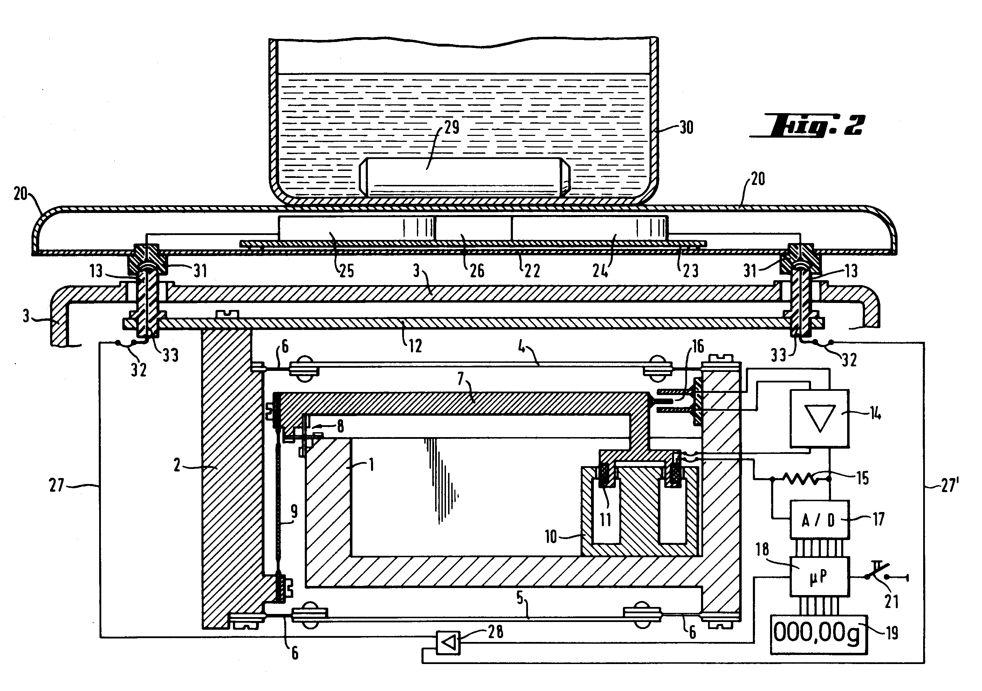

Die Fig. 2 zeigt einen Schnitt durch die wesentlichen mechanischen Teile der Waage und ein Blockschaltbild der Elektronik, wobei das Gehäuse 3 nur teilweise angedeutet ist. Das Wägesystem besteht aus einem Systemträger 1, an dem über zwei Lenker 4 und 5 mit den Gelenkstellen 6 ein Lastaufnehmer 2 in senkrechter Richtung beweglich befestigt ist. Am Lastaufnehmer 2 ist eine Unterschale 12 befestigt, die über isolierende Gummipuffer 13 und ebenfalls isolierende Gegenstücke 31 die eigentliche Waagschale 20/22 trägt.

Die der Masse des Wägegutes entsprechende Kraft wird vom Lastaufnehmer 2 über ein Koppelelement 9 auf den Lastarm des Übersetzungshebels 7 übertragen. Der Übersetzungshebel 7 ist durch ein Kreuzfedergelenk 8 am Systemträger 1 gelagert. Am Kompensationsarm des Übersetzungshebels 7 ist ein Spulenkörper mit einer Spule 11 befestigt. Die Spule 11 befindet sich im Luftspalt eines Permanentmagnetsystems 10 und erzeugt die Kompensationskraft. Die Größe des Kompensationsstromes durch die Spule 11 wird dabei in bekannter Weise durch einen Lagensensor 16 und einen Regelverstärker 14 so geregelt, daß Gleichgewicht zwischen dem Gewicht des Wägegutes und der elektromagnetisch erzeugten Kompensationskraft herrscht. Der Kompensationsstrom erzeugt an einem Meßwiderstand 15 eine Meßspannung, die einem Analog/Digital-Wandler 17 zugeführt wird. Das digitalisierte Ergebnis wird von einer digitalen Signalverarbeitungseinheit 18 übernommen und in der Anzeige 19 digital angezeigt. Von den verschiedenen Bedienungstasten 21 ist in Fig. 2 nur eine eingezeichnet. Diese Teile des Wägesystemes der elektronischen Waage sind allgemein bekannt und im vorstehenden daher nur ganz kurz beschrieben.

Zusätzlich sind nun innerhalb der Waagschale 20/22 drei Spulen 24,25 und 26 vorhanden, die auf einem weichmagnetischen Rückschluß 23 befestigt sind. Diese Spulen werden über Leitungen 27 und 27′ mit Wechselströmen versorgt, wobei die Phasenlage dieser Wechselströme zueinander so gewählt ist, daß oberhalb der Spulen auf der Waagschale ein magnetisches Drehfeld entsteht. Von diesem Drehfeld wird ein Rührmagnet im Behälter auf der Waagschale mitgenommen. Die Oberseite 20 der Waagschale muß daher aus einem unmagnetischen Material bestehen. Das Durchgreifen der magnetischen Feldlinien nach unten wird durch den weichmagnetischen Rückschluß 23 und durch die ebenfalls weichmagnetische Unterplatte 22 der Waagschale 20/22 verhindert. Dadurch werden Wägefehler aufgrund von magnetischen Kräften zwischen den Spulen 24,25,26 und beispielsweise dem Permanentmagneten 10 verhindert. Die magnetischen Kräfte zwischen den Spulen 24,25,26 und dem Rührmagneten im Behälter auf der Waagschale stören die Wägung nicht, da sie sich als innere Kräfte innerhalb des zu wägenden Systems aufheben.

Von den insgesamt vier Stromzuführungen für die drei Spulen 24, 25 und 26 sind in Fig. 2 nur zwei gezeichnet. Die anderen beiden Stromzuführungen sind in gleicher Weise ausgeführt. Die gehäusefesten Leitungen 27 und 27′ sind über flexible Verbindungen 32 mit einer Stromdurchführung 33 im Innern der isolierenden Gummipuffer 13 verbunden. Die flexiblen Verbindungen 32 sind notwendig, um Kraftrückwirkungen auf das Wägesystem zu verhindern. Die Stromdurchführungen 33 enden in Kontaktplättchen auf der Oberseite der Gummipuffer 13. In entsprechender Weise tragen die Isolierstücke 31 Kontaktplättchen auf ihrer Unterseite, an die die Zuleitungen zu den Spulen 24, 25 und 26 angeschlossen sind. Durch diesen Aufbau der Stromzuführungen kann die Waagschale 20/22 abgehoben und z.B. gesäubert werden und beim Wiederauflegen auf die Gummipuffer 13 wird die elektrische Verbindung zu den Spulen 24, 25 und 26 automatisch wiederhergestellt.

Die eventuellen dynamischen Störkräfte durch die Bewegung des Rührers und des Wägegutes werden durch digitale Filterung in der digitalen Signalverarbeitungseinheit 18 praktisch vollständig unterdrückt. Dazu erzeugt die digitale Signalverarbeitungseinheit 18 die Signale für die Ansteuerung der Spulen 24,25,26 selbst. Nur der Leistungsverstärker 28 ist als getrennte Baugruppe außerhalb der digitalen Signalverarbeitungseinheit 18 vorhanden. Der digitalen Signalverarbeitungseinheit 18 ist dadurch die genaue Rührfrequenz bekannt, so daß sie bei der digitalen Filterung der Meßwerte vom Meßwertaufnehmer den Filteralgorithmus so wählen kann, daß gerade diese Frequenz besonders stark unterdrückt wird. Dadurch stören die durch das Rühren verursachten dynamischen Störkräfte das Wägeergebnis in der Anzeige praktisch nicht.

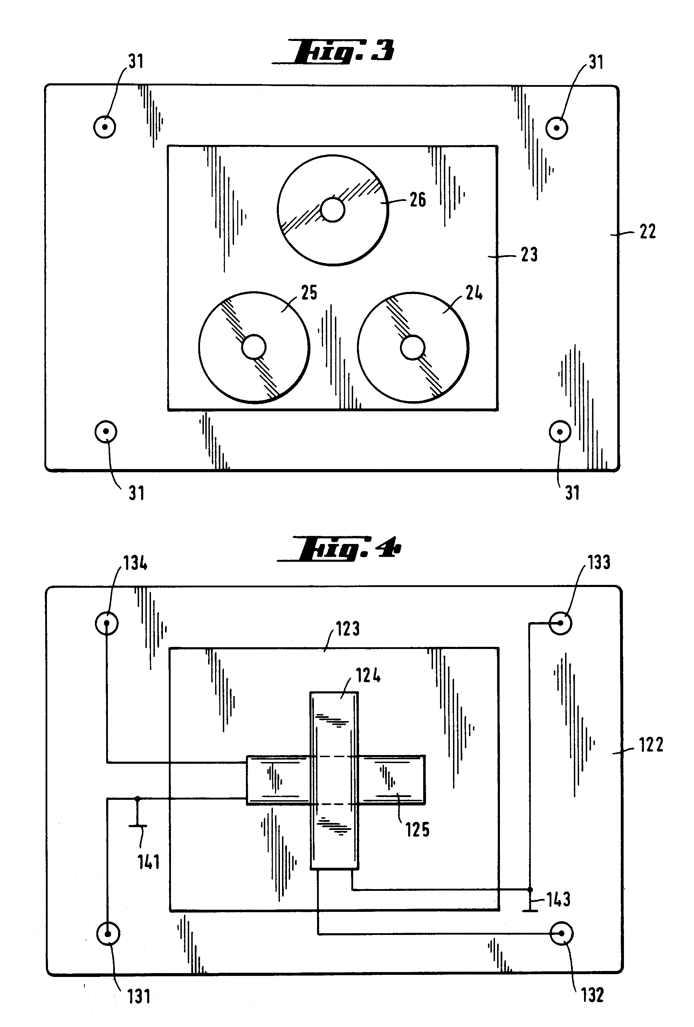

In Fig. 3 ist nochmal eine Aufsicht auf die Unterplatte 22 der Waagschale gezeigt. Man erkennt die Anordnung der drei Spulen 24,25 und 26 auf dem weichmagnetischen Rückschluß 23. Die Mittelpunkte der drei Spulen bilden ein gleichseitiges Dreieck. Werden die drei Spulen mit drei Wechselspannungen versorgt, deren Phasenlage jeweils um 120° gegeneinander verschoben ist, entsteht das für den Rührmagneten benötigte Drehfeld.

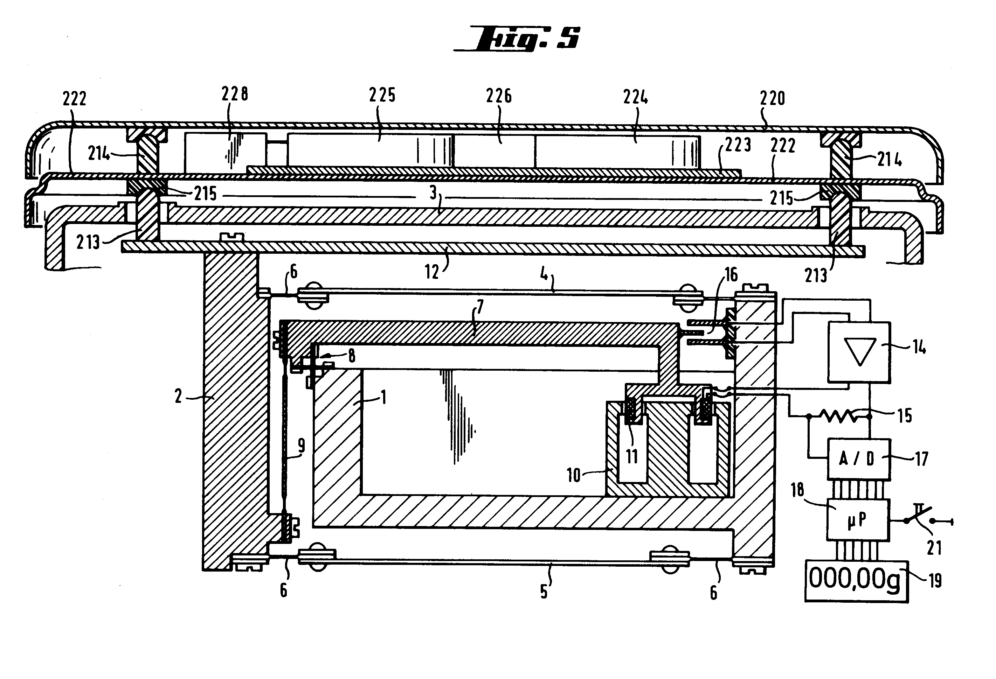

Eine andere Ausgestaltung der Antriebsspulen für den Magnetrührer in der Waagschale ist in Fig. 4 gezeichnet. Die Unterplatte 122 und der weichmagnetische Rückschluß 123 entsprechen den Teilen 22 und 23 der ersten Ausgestaltung nach den Figuren 2 und 3. Statt der drei Spulen in der ersten Ausgestaltung sind in der Ausgestaltung nach Fig. 4 zwei Spulen 124 und 125 mit waagerechter Spulenachse vorgesehen, wobei die beiden Spulen senkrecht zueinander stehen. Die Ansteuerung der Spulen 124 und 125 erfolgt mit zwei um 90° gegeneinander phasenversetzten Wechselspannungen, so daß wieder ein Drehfeld entsteht. Die Wicklungsenden der beiden Spulen 124 und 125 sind an die vier Anschlußpunkte 131...134 geführt, die in der schon beschriebenen Weise über isolierte Anschlußplättchen die Verbindung zur Elektronik innerhalb der Waage herstellen. In dieser Ausgestaltung können die beiden Anschlußpunkte 131 und 133 elektrisch leitend mit der Waagschale verbunden sein (Masseverbindungen 141 und 143). Genauso können die beiden entsprechenden Zuleitungen innerhalb des Gehäuses mit dem Massepotential verbunden sein. Auf diese Weise ist eine Masseverbindung der Waagschale geschaffen. Trotzdem kann die Waagschale 120/122 beliebig auf die Anschluß- und Abstützpunkte aufgelegt werden, da bei einer 180°-Drehung der Waagschale die beiden Massepunkte 131 und 133 unter sich vertauscht werden und nur die Ansteuerung der beiden Spulen vertauscht wird, was auf die Rührwirkung keinen Einfluß hat.

Will man in ähnlicher Weise in der Ausgestaltung nach Fig. 2 und 3 ein beliebiges Aufsetzen der Waagschale erlauben, so muß man beispielsweise die drei Spulen in einer Dreiecksschaltung verbinden und die drei Anschluß- und Abstützpunkte in den Ecken eines gleichseitigen Dreiecks anordnen. Der Masseanschluß der Waagschale kann dann z.B. über drei Widerstände in Sternschaltung erfolgen.

Fig. 5 zeigt eine dritte Ausgestaltung, bei der die Antriebsmittel auf einer Zwischenschale befestigt sind und dadurch eine einfache Nachrüstmöglichkeit erreicht wird.

Das eigentliche Wägesystem, das Gehäuse und die Elektronik - also die Teile mit den Bezugszahlen 1 bis 21 - sind genauso aufgebaut wie in der ersten Ausgestaltung. Die Waagschale 220, die ohne Rührzusatz direkt auf den Gummipuffern 213 aufliegt, liegt bei eingebautem Rührzusatz auf Zwischenpuffern 214. Die Zwischenpuffer 214 sind auf einer Zwischenschale 222 befestigt, die die Antriebsspulen 224, 225 und 226 des Magnetrührers tragen. Unterhalb der Zwischenschale 222 sind direkt unterhalb der Zwischenpuffer 214 konkave Abstandsteile 215 angebracht, mit denen sich die Zwischenschale 222 auf den Gummipuffern 213 und damit auf dem Wägesystem abstützt. Auf der Zwischenschale 222 ist weiter der weichmagnetische Rückschluß 223 befestigt. Die Ansteuerelektronik kann entweder als Baugruppe 228 ebenfalls auf der Zwischenschale 222 befestigt sein oder aber gesondert untergebracht sein.

## Patentansprüche

1. Oberschalige elektronische Waage, dadurch gekennzeichnet, daß in der Waagschale (20/22,220) die Antriebsmittel (24,25,26,124,125,224,225,226) für einen Magnetrührer integriert sind.

2. Oberschalige elektronische Waage nach Anspruch 1, dadurch gekennzeichnet, daß die Antriebsmittel durch einen flachen Elektromotor mit vertikaler Achse und an dessen oberen Ende angeordneten Permanentmagneten gebildet ist.

3. Oberschalige elektronische Waage nach Anspruch 1, dadurch gekennzeichnet, daß die Antriebsmittel aus mehreren, an der Waagschale befestigten Spulen (24,25, 26,124,125) bestehen, die ein magnetisches Drehfeld erzeugen.

4. Oberschalige elektronische Waage nach einem der Ansprüche 1 bis 3, dadurch gekennzeichnet, daß sich in der Waagschale (20/22,220) unterhalb der Antriebsmittel (24,25,26,124,125,224,225,226) für den Magnetrührer mindestens ein Abschirmblech (23,123,223) aus einem weichmagnetischen Werkstoff befindet.

5. Oberschalige elektronische Waage nach einem der Ansprüche 1 bis 4, dadurch gekennzeichnet, daß in einer Auswerteelektronik (18) der Waage Filter vorhanden sind, die bei der Frequenz des Magnetrührers eine besonders große Störunterdrückung besitzen.

6. Oberschalige elektronische Waage nach einem der Ansprüche 1 bis 5, dadurch gekennzeichnet, daß sich die Waagschale (20/22) an mindestens drei Punkten auf einer Unterschale (12) abstützt, daß diese Abstützpunkte aus Metall bestehen, daß mindestens zwei dieser Abstützpunkte elektrisch gegenüber der Unterschale (12) und gegenüber der Waagschale (20/22) isoliert sind und daß über diese Abstützpunkte die Stromversorgung der Antriebsmittel (24,25,26) für den Magnetrührer erfolgt.

7. Oberschalige elektronische Waage nach einem der Ansprüche 1 bis 6, dadurch gekennzeichnet, daß sich die Waagschale (220) auf einer Zwischenschale (222) abstützt, daß sich die Zwischenschale (222) auf einer Unterschale (12) bzw. direkt auf dem Lastaufnehmer (2) des Wägesystems abstützt und daß die Antriebsmittel (224,225,226) für den Magnetrührer an der Zwischenschale (222) befestigt sind.

8. Oberschalige elektronische Waage nach einem der Ansprüche 1 bis 7, gekennzeichnet durch ein von einem Gehäuse (3) umschlossenes Wägesystem (1,2,4 bis 11), welches nach dem Prinzip der elektromagnetischen Kraftkompensation arbeitet, eine Auswerteelektronik (14 bis 19), eine vom Wägesystem (1,2,4 bis 11) abgestützte Waagschale (20) mit integrierten Antriebsmitteln (24,25, 26,124,125,224,225,226) für einen Magnetrührer, Abschirmmittel (23,123,223) zwischen Waagschalenoberseite und Wägesystem (1,2,4 bis 11) und elektronische Filter in der Auswerteelektronik (14 bis 19) zur Störunterdrückung von gegebenenfalls vom Magnetrührersystem ausgehenden Störfrequenzen.

## Claims

1. Upper pan electronic weighing machine, characterised thereby that the drive means (24, 25, 26, 124, 125, 224, 225, 226) for a magnetic agitator are integrated into the weighing pan (20/22, 220).

2. Upper pan electronic weighing machine according to claim 1, characterised thereby that the drive means is formed by a flat electric motor with vertical axis and permanent magnets arranged at the upper end thereof.

3. Upper pan electronic weighing machine according to claim 1, characterised thereby that the drive means consist of several coils (24, 25, 26, 124, 125), which are fastened to the weighing pan and which produce a rotating magnetic field.

4. Upper pan electronic weighing machine according to one of the claims 1 to 3, characterised thereby that at least one screening metal plate (23, 123, 223), which is of a soft magnetic material, is disposed in the weighing pan (20/22, 220) underneath the drive means (24, 25, 26, 124, 125, 224, 225, 226) for the magnetic agitator.

5. Upper pan electronic weighing machine according to one of the claims 1 to 4, characterised thereby that present in an evaluating electronic unit (18) of the weighing machine are filters which possess a particularly large interference suppression at the frequency of the magnetic agitator.

6. Upper pan electronic weighing machine according to one of the claims 1 to 5, characterised thereby that the weighing pan (20/22) is supported at at least three points on a lower pan (12), that these support points consist of metal, that at least two of these support points are electrically insulated relative to the lower pan (12) and relative to the weighing pan (20/22) and that the current supply to the drive means (24, 25, 26) for the magnetic agitator takes place by way of these support points.

7. Upper pan electronic weighing machine according to one of the claims 1 to 6, characterised thereby that the weighing pan (220) is supported on an intermediate pan (222), that the intermediate pan (222) is supported on a lower pan (12) or directly on the load pick-up (2) of the weighing system and that the drive means (224, 225, 226) for the magnetic agitator are fastened to the intermediate pan (222).

8. Upper pan electronic weighing machine according to one of the claims 1 to 7, characterised by a weighing system (1, 2, 4 to 11), which operates according to the principle of the electromagnetic force compensation and which is enclosed by a housing (3), an evaluating electronic unit (14 to 19), a weighing pan (20), which is supported by the weighing system (1, 2, 4 to 11), with integrated drive means (24, 25, 26, 124, 125, 224, 225, 226) for a magnetic agitator, screening means (23, 123, 223) between weighing pan upper side and weighing system (1, 2, 4 to 11), and electronic filters in the evaluating electronic unit (14 to 19) for suppression of interference from interference frequencies deriving in a given case from the magnetic agitating system.

## Revendications

1. Balance électronique à plateau supérieur, caractérisée en ce que dans le plateau de balance (20/22,220) les organes d'entraînement (24,25,26,124,125,224,225,226) pour un agitateur magnétique sont intégrés.

2. Balance électronique à plateau supérieur selon la revendication 1, caractérisée en ce que l'organe d'entraînement est constitué par un moteur électrique plat à axe vertical, des aimants permanents étant placés à l'extrémité supérieure du moteur.

3. Balance électronique à plateau supérieur selon la revendication 1, caractérisée en ce que les organes d'entraînement se composent de plusieurs bobines (24,25,26,124,125) fixées au plateau de balance, lesquelles créent un champ magnétique rotatif.

4. Balance électronique à plateau supérieur selon l'une des revendications 1 à 3, caractérisée en ce que dans le plateau de balance (20/22,220), en dessous des moyens d'entraînement (24,25,26,124,125,224,225,226) pour l'agitateur magnétique, l'on trouve au minimum une tôle de protection (23,123,223) en matériau magnétique doux.

5. Balance électronique à plateau supérieur selon l'une des revendications 1 à 4, caractérisée en ce que dans une électronique d'exploitation de la balance (18) se trouvent des filtres, qui, pour la fréquence de l'agitateur magnétique, possèdent une capacité d'élimination des parasites particulièrement élevée.

6. Balance électronique à plateau supérieur selon l'une des revendications 1 à 5, caractérisée en ce que le plateau de balance (20/22) prend appui par trois points au minimum sur un sous-plateau (12), en ce que ces points d'appui sont en métal, en ce qu'au moins deux de ces points d'appui sont isolés électriquement vis-à-vis du sous-plateau (12) et du plateau de balance (20/22) et en ce que l'alimentation en courant électrique des moyens d'entraînement (24,25,26) pour l'agitateur magnétique s'effectue par l'intermédiaire de ces points d'appui.

7. Balance électronique à plateau supérieur selon l'une des revendications 1 à 6, caractérisée en ce que le plateau de balance (220) s'appuie sur un plateau intermédiaire (222), en ce que le plateau intermédiaire (222) prend appui sur un sous-plateau (12) ou directement sur le capteur de charge(2) du système de pesage et en ce que les moyens d'entraînement (224,225,226) pour l'agitateur magnétique sont fixés au plateau intermédiaire (222).

8. Balance électronique à plateau supérieur selon l'une des revendications 1 à 7, caractérisée par un système de pesage (1,2,4 jusqu'à 11) entouré par un carter (3), lequel système travaille selon le principe de la compensation électromagnétique de forces, par une électronique d'exploitation (14 à 19), par un plateau de balance (20) soutenu par le système de pesage (1,2,4 jusqu'à 11) et comportant des moyens d'entraînement intégrés (24,25,26,124,125,224,225,226) pour un agitateur magnétique, par des moyens de protection (23, 123,223) entre la face supérieure du plateau de balance et le système de pesage (1,2,4 jusqu'à 11) et par des filtres électroniques dans l'électronique d'exploitation (14 à 19) pour éliminer les parasites dus aux fréquences parasites provenant éventuellement du système d'agitateur magnétique.
